# EUROPEAN PATENT SPECIFICATION

(11) **EP 2 738 847 B1**
(45) Date of publication and mention of the grant of the patent: **22.03.2017**
(21) Application number: 11870226.5
(22) Date of filing: 29.07.2011
(51) Int. Cl.: H01M 4/66, C22C 21/00, C22F 1/04, C22F 1/00, H01M 10/0525

(54) **COLLECTOR, ELECTRODE STRUCTURE, NON-AQUEOUS ELECTROLYTE BATTERY, AND ELECTRICITY STORAGE COMPONENT**
KOLLEKTOR, ELEKTRODENSTRUKTUR, BATTERIE MIT NICHTWÄSSRIGEM ELEKTROLYT UND STROMSPEICHERKOMPONENTE
COLLECTEUR, STRUCTURE D'ÉLECTRODES, BATTERIE À ÉLECTROLYTE NON AQUEUX ET COMPOSANT ACCUMULATEUR ÉLECTRIQUE

(43) Date of publication of application: 04.06.2014
(73) Proprietor: UACJ Corporation, Tokyo 100-0004 (JP); UACJ Foil Corporation, Chuo-ku Tokyo 1030026 (JP)
(72) Inventor: SEKI, Masakazu, Tokyo 1000004 (JP); KATO, Osamu, Tokyo 1000004 (JP); SAITO, Sohei, Tokyo 1000004 (JP); HONKAWA, Yukiou, Tokyo 1000004 (JP); SUZUKI, Satoshi, Tokyo 1000004 (JP); ASHIZAWA, Koichi, Kusatsu-shi Shiga 525-0042 (JP); WASAMOTO, Mitsuyuki, Kusatsu-shi Shiga 525-0042 (JP); KADOWAKI, Kenichi, Kusatsu-shi Shiga 525-0042 (JP); YAMAMOTO, Kenji, Kusatsu-shi Shiga 525-0042 (JP); FURUTANI, Tomohiko, Kusatsu-shi Shiga 525-0042 (JP)
(74) Representative: Gulde & Partner
(86) International application number: PCT/JP2011/067459
(87) International publication number: WO 2013/018157

(56) References cited:
- WO-A1-2010/109783
- JP-A- 4 247 855
- JP-A- 11 162 787
- JP-A- H11 162 470
- JP-A- S58 221 265
- JP-A- 2001 064 757
- JP-A- 2001 335 868
- JP-A- 2004 207 117
- JP-A- 2006 336 058
- JP-A- 2010 278 125
- US-A1- 2007 109 722
- "International Alloy Designations and Chemical Composition Limits for Wrought Aluminum and Wrought Aluminum Alloys With Support for On-line Access From: Aluminum Extruders Council Aluminium Federation of South Africa Australian Aluminium Council Ltd. European Aluminium Association Japan Aluminium Ass", , 1 February 2009 (2009-02-01), XP055136121, Retrieved from the Internet: URL:http://www.aluminum.org/sites/default/ files/Teal_Sheets.pdf [retrieved on 2014-08-22]

## Description

### Technical Field

The present invention relates to a current collector suitable for charge and discharge at a large current density, an electrode structure using the current collector, a non-aqueous electrolyte battery using the electrode structure, and to a capacitor member (electrical double layer capacitor, lithium ion capacitor, and the like).

### Background Art

Lithium-ion secondary batteries with high energy densities have been used as power sources for portable electronics such as a mobile phone and a notebook computer.

An electrode member of a lithium-ion secondary battery generally includes a positive electrode, a separator, and a negative electrode. Regarding a positive electrode material, an aluminum alloy foil has been used as a support, having excellent electrical conductivity and less heat generation without affecting electrical efficiency of a secondary battery. Here, aluminum alloy of JIS1085 and JIS3003 have been generally used. As an active material layer material, a resin containing an active material having a lithium-containing metal oxide such as LiCoO₂ as a chief component is applied on a surface of the aluminum alloy foil. Its production process includes: applying an active material (to mean the active material layer material, the same shall apply hereinafter) with a thickness of about 100 µm onto an aluminum alloy foil with a thickness of about 20 µm; and drying the active material to remove a solvent therefrom. Further, in order to increase the density of the active material, compression forming is performed with a pressing machine (hereinafter referred to as press working). The positive electrode as so manufactured, a separator, and a negative electrode are stacked, and then the resulting stack is wound. After a shaping process is performed so as to encase the stack, it is encased.

Recently, a high electrical conductivity has been required for an aluminum alloy foil used for a positive electrode material of a lithium-ion secondary battery. What is meant by the electrical conductivity refers to physical property indicating how easily electricity is conducted in a substance. The higher the electrical conductivity is, the more easily the electricity is conducted. Lithium-ion secondary batteries used for automobiles and/or electric tools necessitate a higher output characteristic than lithium-ion secondary batteries used for consumer-use mobile phones and/or notebook computers. When a large current flows, a lower electrical conductivity causes internal resistance of a battery to increase. Consequently, this reduces its output voltage.

An aluminum alloy foil whose A1 purity is 99% or more has been used as an alloy foil for a lithium-ion secondary battery, which requires a high electrical conductivity. However, the aluminum alloy foil whose A1 purity is 99% or more makes it difficult to improve its strength. That is, since there are fewer fine precipitates or solid-solution elements that can suppress their dislocation movement during heat treatment, a decrease in the strength becomes large.

That is, as for materials for electrode current collectors, in particular, as for electrode materials for lithium-ion secondary batteries, it has been sought to use an aluminum alloy foil having a higher strength after final cold rolling and a higher strength after heating during a drying step while keeping a higher electrical conductivity.

Patent Literature 1 discloses an aluminum alloy foil with a tensile strength of 98 MPa or higher, which foil is used for an electrode current collector. However, there is no disclosure concerning the strength after the drying process during the manufacturing process of the positive electrode for the lithium ion secondary batteries.

Patent Literature 2 discloses an aluminum alloy foil with a tensile strength of 160 MPa or higher, which foil is used for an electrode current collector of a lithium-ion secondary battery. However, the strength after heat treatment, which simulates a drying step, is low. This strength is insufficient for preventing wrinkles during winding and ruptures during a slitting process because middle waviness occurs during press working.

Patent Literature 3 sets forth a method for preventing detachment from an active material without inducing plastic deformation during press working by increasing strength. However, the alloy used contains Mn, Cu, and Mg as principal elements. Therefore, it is impossible to achieve a high electrical conductivity.

On the other hand, an aluminum alloy foil used for a positive electrode material of a lithium-ion secondary battery has several problems that cuts occur during application of an active material and that ruptures occur at a bending portion during winding. Thus, a higher strength is required. At a drying step after the application of the active material, heat treatment is carried out at about 100 to 180°C. Accordingly, a lower strength after the drying step is likely to generate middle waviness during press working. This induces wrinkles during winding, which reduces adhesion between the active material and the aluminum alloy foil. Besides, a rupture is likely to occur during a slitting process. When the adhesion between the active material and a surface of the aluminum alloy foil decreases, their detachment is facilitated during repeated operation of discharge and charge. Unfortunately, this causes its battery capacity to decrease.

Accordingly, as a solution for improving the adhesion between the positive electrode material and the active material layer, proposal to coat the positive electrode material with a conductive resin as a current collector has generally been made. The following Patent Literature discloses a technique to coat the positive electrode material with an acryl-based resin. Patent Literature 4 discloses a manufacturing method of a positive electrode with superior adhesion. This method includes a preparation of a conductive medium which uses polyacrylic acid or a copolymer of acrylic acid and acrylic acid ester as a main biding agent, and uses carbon powder as a conductive filler. The method further includes applying the conductive medium on a metal foil, forming a positive electrode mixture layer on the conductive resin layer, and then performing drying treatment to unify the layers, thereby obtaining the positive electrode. Patent Literature 5 discloses a negative electrode plate for lithium ion secondary batteries. The negative electrode plate for lithium ion secondary batteries includes a negative electrode material layer which is formed on a negative electrode current collector, the negative electrode material layer including a binding agent comprising a carbon powder which can occlude and release lithium ions and PVDF (polyvinylidene fluoride). In the negative electrode plate for lithium ion secondary batteries, a binder layer comprising an acryl-based copolymer is formed in between the negative electrode current collector and the negative electrode material layer. The acryl-based copolymer is added with a conductive material. Patent Literature 6 discloses a current collector comprising a metal foil coated with a resin layer comprising an ethylene-methacrylic acid copolymer ionomer and a conductive filler. Such current collector can achieve superior adhesion and electrode structure with excellent cycle characteristics.

Patent Literature 7 discloses a current collector comprising an aluminium substrate and a resin layer with an acryl- or chitosan-based resin.

### Citation List

### Patent Literature

[Patent Literature 1] JPH11-162470A
[Patent Literature 2] JP2010-150637A
[Patent Literature 3] JP2008-150651A
[Patent Literature 4] JPS62-160656A
[Patent Literature 5] JPH9-35707A
[Patent Literature 6] JPH11-144737A
[Patent Literature 7] US 2007/0109722 A1

### SUMMARY OF INVENTION

### Technical Problem

However, there were cases where sufficient high rate characteristics cannot always be obtained. When the current collector is structured by coating the conductive substrate such as aluminum, copper and the like with a conductive resin, it is important that the adhesion between the conductive resin layer and active material layer is high and the volume resistivity of the conductive resin layer itself is low, from the viewpoint of achieving low interface resistance between the current collector and the active material layer. Here, adhesion affects the interface resistance between the conductive resin layer and the active material layer, and the term "adhesion" means that there is no detachment even when the layers are permeated with electrolyte and the layers are adhered firmly. In addition, concerning a non-aqueous electrolyte battery, the volume of the active material layer changes by charging and discharging. Therefore, detachment between the active material layer and the current collector easily occur. Since the volume change in the active material concerning high rate charging and discharging is large, high adhesion is especially required. In conventional techniques, it is assumed that adhesion between the conductive resin layer and the active material layer was not sufficient and that suppression in volume resistivity of the conductive resin layer itself was not sufficient. In addition, when the current collector is structured by coating the conductive substrate with a conductive resin layer, the interface resistance stemming from the adhesion between the conductive substrate and the conductive resin layer would also affect the discharge rate. However, suggestions of the conventional techniques were mostly related to improvement in adhesion between the current collector and the active material layer, and no consideration was made for the adhesion between the conductive substrate and the conductive resin layer.

An object of the present invention is to provide a current collector which is provided with an aluminum alloy foil for electrode current collector, with high electrical conductivity and high strength after a drying process performed after application of an active material.

In particular, the current collector of the present invention can decrease the internal resistivity of a non-aqueous electrolyte battery, and can suitably be used for a capacitor member of a non-aqueous electrolyte battery such as lithium ion secondary battery and the like, electrical double layer capacitor, lithium ion capacitor and the like. The current collector can improve the high rate characteristics. The current collector of the present invention can provide an electrode structure having low interface resistance between the active material layer and the electrode material layer, by forming an active material layer or an electrode material layer. In addition, the non-aqueous electrolyte battery using the electrode structure, the electrode structure having an active material layer formed on the current collector of the present invention, can achieve improved high rate characteristics by decreasing the internal resistance thereof by including the current collector having the afore-mentioned characteristics. Further, the present invention provides a capacitor member such as an electrical double layer capacitor, lithium ion capacitor and the like, which require charging and discharging of a large current. Such capacitor member is used in copy machines and automobiles.

### Solution to Problem

According to the present invention, provided is a current collector with a conductive substrate and a resin layer , according to claim 1.

The inventors of the present invention have first made an investigation regarding the aluminum alloy foil, and have found that high electrical conductivity and high strength after the heat treatment during the drying step after the application of the active material can be maintained, by controlling the solid solution precipitation conditions for their elements, which is achieved by regulating the content of the component within an appropriate range and by raising the temperature applied during the homogenization treatment of the ingot. When the aluminum alloy foil thus obtained is used, decrease in strength by the drying process after the application of the active material was suppressed. However, a new issue arose since the high rate characteristics were not superior.

Accordingly, the inventors of the present invention have made an investigation by focusing on the physical properties of the resin layers provided in between the aluminum alloy foil and the active material layer, and have found that improvement in the high rate characteristics can be achieved by regulating the water contact angle of the resin layer surface within particular numerical values, thereby leading to completion of the present invention.

More specifically, the water contact angles which can improve the high rate characteristics are : 30 degrees or more and 105 degrees or less when the resin included in the resin layer is the acryl-based resin, 100 degrees of more and 110 degrees or less when the resin included in the resin layer is the soluble nitrocellulose-based resin, and 20 degrees or more and 50 degrees or less when the resin included in the resin layer is the chitosan-based resin.

The present invention is established by the following two findings. The first finding is that when the water contact angle is at or less than a particular upper limit, the high rate characteristics is superior. The contact angle is one indicator which shows the degree of adhesion between different materials. The smaller the contact angle is, the higher the adhesion between the materials is. Therefore, when the contact angle is at or less than the afore-mentioned upper limit, the adhesion between the conductive substrate and the resin layer, and the adhesion between the resin layer and the active material layer, becomes high, achieving superior high rate characteristics.

The other finding is that when the water contact angle is at or more than a particular lower limit, the high rate characteristics is superior. As mentioned above, the water contact angle is one indicator which shows adhesion between different materials. The smaller the contact angle is, the higher the adhesion between the materials. The inventors of the present invention have at first thought that there is no lower limit to the preferable range of the water contact angle, which means that the smaller the water contact angle is, the adhesion between the different materials would increase, achieving improvement in high rate characteristics. However, the inventors have surprisingly found that when the water contact angle is less than the afore-mentioned lower limit, the high rate characteristics worsens. The reasons why such results were obtained is currently under investigation and thus is not clear, however, it is assumed that when the water contact angle is too small, the adhesion between the conductive substrate and the resin layer worsens.

Here, the water contact angle of the resin layer is not uniquely-defined by the composition of the resin layer, and varies largely when the method for forming the resin layer varies. The inventors of the present invention have actually conducted experiments and found that even when the resin material has the same composition, variation of drying temperature, drying time, and drying method resulted in a large variation of the water contact angle of the resin layer. For example, it became apparent that even when the resin composition and the drying temperature is known, the mere change in the manufacturing conditions such as the drying time would vary the water contact angle, and thus it is important to determine the water contact angle in the present invention.

### Advantageous Effects of Invention

According to the present invention, since the aluminum alloy foil has a high electrical conductivity as well as high strength after the drying process after the application of an active material, a current collector suitable for providing high rate characteristics can be provided as an aluminum alloy current collector for lithium ion batteries. Here, no generation of middle waviness is observed during the press working, and is capable of preventing detachment of the active material and occurrence of rupture during a slitting process.

### BRIEF DESCRIPTION OF THE DRAWINGS

[FIG. 1] FIG. 1 is a cross-sectional view showing a constitution of the current collector according to one embodiment of the present invention.
[FIG. 2] FIG. 2 is a cross-sectional view showing a constitution of an electrode structure formed by using the current collector according to one embodiment of the present invention.

### Description of Embodiments

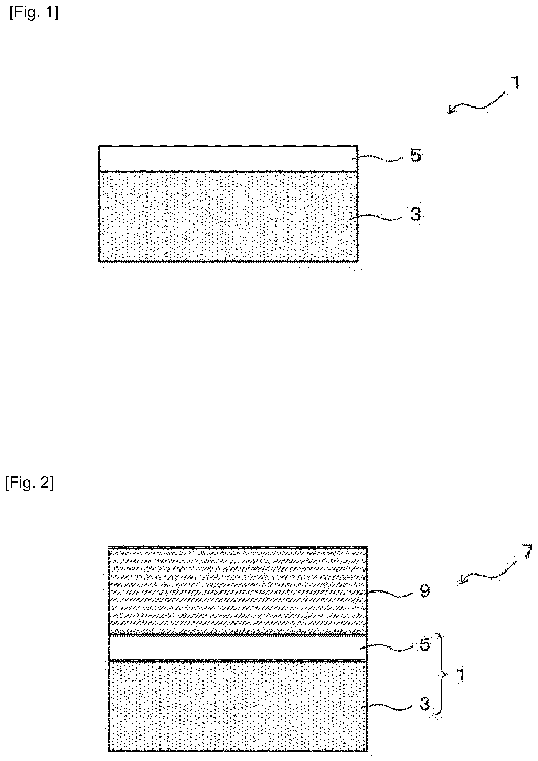

Hereinafter, the current collector according to one embodiment of the present invention will be explained with reference to FIG. 1.

As shown in FIG. 1, the current collector 1 of the present invention comprises a conductive substrate 3 provided with a resin layer (resin layer for current collector) 5 possessing electrical conductivity at one side or both sides of the conductive substrate 3.

In addition, as shown in FIG. 2, an electrode structure 7 can be formed by forming an active material layer or an electrode material layer 9 on the resin layer 5 of the current collector 1. The electrode structure 7 thus formed is suitable for a non-aqueous electrolyte battery, an electrical double layer capacitor, or a lithium ion capacitor.

Hereinafter, each of the constituting components will be described in detail.

### < 1. Conductive Substrate>

The conductive substrate of the present invention is an aluminum alloy foil comprising 0.03 to 1.0 mass% (hereinafter mass% is referred to as %) of Fe, 0.01 to 0.3% of Si, 0.0001 to 0.2 % of Cu, with the rest consisting of Al and unavoidable impurities. The aluminum alloy foil after a final cold rolling has a tensile strength of 180 MPa or higher, a 0.2% yield strength of 160 MPa or higher, and an electrical conductivity of 58% IACS or higher. The aluminum alloy foil has a tensile strength of 170 MPa or higher and a 0.2% yield strength of 150 MPa or higher even after the aluminum alloy foil after the final cold rolling is subjected to heat treatment at any of 120°C for 24 hours, 140°C for 3 hours, and 160°C for 15 minutes.

Details are described as follows.

### <Composition of Aluminum Alloy Foil>

The aluminum alloy foil according to the present invention comprises: 0.03 to 1.0% of Fe, 0.01 to 0.3% of Si, 0.0001 to 0.2% of Cu, with the rest consisting of Al and unavoidable impurities.

Fe is an element that increases strength by addition thereof, and 0.03 to 1.0% of Fe is included. When the additive amount of Fe is less than 0.03%, there is no contribution to the improvement in strength. In contrast, when the additive amount of Fe exceeds 1.0%, Al-Fe compound or Al-Fe-Si compound becomes well observed in and at the surface of the aluminum alloy foil, which leads to unfavorable phenomena of increased generation of pinholes.

Si is an element that increases strength by addition thereof, and 0.01 to 0.3% of Si is included. When the additive amount of Si is less than 0.01%, there is almost no contribution to the improvement in strength. In addition, Si is included in a common Al base metal as impurities. As a result, in order to restrict the amount to less than 0.01%, a high-purity base metal should be used. This is difficult to achieve in view of economic reasons. In contrast, when the additive amount of Si exceeds 0.3%, Al-Fe-Si compound becomes well observed in and at the surface of the aluminum alloy foil, which leads to unfavorable phenomena of increased generation of pinholes.

Cu is an element that increases strength by addition thereof, and 0.0001 to 0.2% of Cu is included. When the additive amount of Cu is less than 0.0001%, there is almost no contribution to the improvement in strength. In addition, this is difficult to achieve in view of economic reasons since a high-purity base metal need be used. In contrast, when the additive amount of Cu exceeds 0.2%, work hardening increases, thereby becoming prone to cut during the foil rolling.

With regard to other points, a material of an embodiment of the present invention contains unavoidable impurities such as Cr, Ni, Zn, Mn, Mg, Ti, B, V, and/or Zr. An amount of each of the unavoidable impurities is 0.02% or less, and a total amount thereof is 0.15% or less. When the amount of Si, Fe, or Cu exceeds its upper limit, there are cases where sufficient electrical conductivity cannot be obtained.

### <Original Sheet Strength>

With regard to an aluminum alloy primarily containing Fe, Si and Cu, when the temperature for the homogenization treatment is raised, allowing each of the minutely added elements to form solid solution as much as possible, dislocation movement can be reduced, thereby maintaining higher strength. Further, as the content of the solid solution increases, work hardening increases. Accordingly, the degree of strength of the aluminum alloy foil improved by cold rolling and foil rolling becomes large, thereby improving the strength of the aluminum alloy foil.

Tensile strength of an original sheet after final cold rolling should be 180 MPa or higher. Then, 0.2% yield strength thereof should be 160 MPa or higher.
When the tensile strength is less than 180 MPa and the 0.2% yield strength is less than 160 MPa, the strength is insufficient. Consequently, tension imposed during application of an active material is likely to produce cuts and cracks. In addition, the above causes defects such as middle waviness, exerts adverse effects on its productivity, and is thus not preferred.

### <Electrical Conductivity>

Electrical conductivity should be 58% IACS or higher. The electrical conductivity represents a solid solution state of a solute element. An electrode current collector according to an embodiment of the present invention may be used for a lithium-ion secondary battery. In that case, when a discharge rate exceeds 5C, which is a high current level, electrical conductivity of less than 58% IACS is not preferable because electrical conductivity imparted by the resin layer is insufficient and leads to decrease in battery capacity. Note that the "1C" means a current level to complete, in one hour, the discharge from a cell having the nominal capacity value when a constant current at the current level is discharged from the cell.

### <Strength After Heat Treatment>

A step of manufacturing a positive electrode plate includes a drying step after application of an active material so as to remove a solvent from the active material. At this drying step, heat treatment is carried out at a temperature of about 100 to 180°C. This heat treatment may cause a change in mechanical property because an aluminum alloy foil is softened. Thus, the mechanical property of the aluminum alloy foil after the heat treatment is critical. During heat treatment at 100 to 180°C, external heat energy activates dislocation and facilitates its movement. This decreases strength in the course of restoration thereof. In order to prevent the strength decrease in the course of the restoration during the heat treatment, reducing the dislocation movement by using solid-solution elements or precipitates in the aluminum alloy is effective. In an aluminum alloy primarily containing Fe, Si, and Cu, in particular, a solid solution content of Fe has a large effect. Specifically, more of the minutely added Fe can form solid solution by increasing a temperature of homogenizing treatment of an ingot. Then, during hot rolling, the resulting Fe solid solution should not be subject to precipitation as much as possible, and an increased solid solution content should be maintained. This reduces the strength decrease after the heat treatment.

In the present invention, in order to achieve tensile strength of 170 MPa or higher and 0.2% yield strength of 150 MPa or higher after heat treatment at 120°C for 24 hours, at 140°C for 3 hours, or at 160°C for 15 minutes, conditions of the homogenizing treatment applied to the aluminum alloy foil after the final cold rolling is regulated. If the tensile strength is less than 170 MPa or the 0.2% yield strength is less than 150 MPa after the heat treatment, middle waviness is likely to occur during press working after the drying step. This causes wrinkles during winding, and readily generates detachment of an active material and ruptures during a slitting process. The above strengths are therefore not preferred.

### <Method for Manufacturing Aluminum Alloy Foil>

The following steps are used to manufacture an aluminum alloy ingot having the above alloy composition according to an embodiment of the present invention.

The aluminum alloy having the above composition can be used to prepare an ingot after casting in accordance with a common procedure. Examples of the procedure used for their manufacturing include semi-continuous casting and continuous casting. The aluminum alloy cast ingot is subjected to homogenizing treatment at 550 to 620°C for 1 to 20 hours.

When the temperature of the homogenizing treatment is lower than 550°C or the holding time is less than 1 hour, elements such as Si and Fe cannot form solid solution sufficiently, which leads to insufficient solid solution content, resulting in low strength before and after the heat treatment. The above condition is thus not preferred. When the temperature exceeds 620°C, the ingot melts locally. In addition, a tiny amount of hydrogen gas mixed in during casting appears on the surface, thereby readily causing swelling on the material surface. The above condition is thus not preferred. Also, it is unfavorable that the homogenizing treatment period exceeds 20 hours, in view of productivity and cost.

The above homogenizing treatment is followed by hot rolling, cold rolling, and foil rolling to produce an aluminum alloy foil with a thickness of 6 to 30 µm. The hot rolling starts at a temperature of 500°C or higher after the homogenizing treatment. When the hot rolling has a starting temperature of lower than 500°C, a precipitation amount of elements such as Si and Fe increases. Consequently, it is difficult to preserve a solid solution content to improve its strength. The solid solution content of Fe, in particular, has a large effect on maintenance of high strength. When the temperature ranges from 350 to 500°C, Fe is susceptible to precipitation as Al₃Fe or an intermetallic compound for Al-Fe-Si series. Thus, a time going through this temperature range should be as short as possible. During the hot rolling, in particular, a time going through a temperature range from 350 to 500°C is preferably within 20 minutes.

The end-point temperature of the hot rolling is 255 to 300°C. The end-point temperature at the time of the hot rolling can be determined by changing a line speed and by thus adjusting processing heat and cooling conditions. Note that a hot-rolled aluminum sheet is wound and cooled as a coil at the outlet side of a hot roller.

In order to set the end-point temperature of the hot rolling to be lower than 255°C, the line speed should be markedly decreased to prevent occurrence of the processing heat. However, the productivity decreases. When the end-point temperature of the hot rolling exceeds 300°C, aluminum recrystallization proceeds inside the coil during cooling. Accordingly, accumulated strain is reduced and the strength is lowered. More preferably, the temperature range is set to be from 255 to 285°C.

After the hot rolling, cold rolling is performed. Here, it is preferable that intermediate annealing is not performed before or in between the cold rollings. When the intermediate annealing is performed, the strain accumulated during the hot rolling and the cold rolling before the intermediate annealing is released. In addition, Fe which have formed solid solution during the homogenizing treatment and the hot rolling precipitate. Accordingly, the solid solution content would decrease, and the strength after heat treatment at 120 to 160°C for 15 minutes to 24 hours would also decrease.

After the final cold rolling, the aluminum alloy foil should have a thickness of 6 to 30 µm. When the thickness is less than 6 µm, pin holes are likely to occur during foil rolling. This situation is not preferable. When the thickness exceeds 30 µm, the volume and weight of an electrode current collector increase and the volume and weight of an active material decrease in the same occupied space. In the case of a lithium-ion secondary battery, the above is not preferable because a battery capacity decreases.

### <Resin Layer>

The resin layer according to the present invention includes a resin comprising an acryl-based resin, a soluble nitrocellulose-based resin, or a chitosan-based resin and a conductive material.

### <Method for Forming the Resin Layer>

In the present invention, a resin layer added with the conductive material is formed on the conductive substrate. There is no particular limitation with respect to the method of forming, however, it is preferable that a solution or a dispersion of the resin is coated on the conductive substrate. As the method for coating, a roll coater, a gravure coater, a slit dye coater and the like can be used. The resin used in the present invention must be an acryl-based resin, soluble nitrocellulose-based resin, or a chitosan-based resin. This is a result of examining the volume resistivity of the resin layer by adding a conductive material to various resins, from such result the present inventors have found that sufficiently low resistance can be obtained by using these resin with regulated water contact angle. Here, even when the same conductive material is added, difference in the distribution state of the conductive material is observed when the resin to which the conductive material is added is different. It is assumed that the difference in resistance is caused by this difference in the distribution state, together with the rules of the water contact angle as described later.

Hereinafter, the number average molecular weight or the weight average molecular weight is obtained by GPC (gel permeation chromatography).

### <Acryl-based Resin>

The acryl-based resin used in the present invention is a resin formed from monomers containing acrylic acid or methacrylic acid, or derivatives thereof, as a main component. The ratio of acrylic component in the monomer of the acryl-based resin is 50 wt% or higher for example, preferably 80 wt% or higher. The upper limit is not particularly specified, and the monomers of the acryl-based resin may substantially contain only acrylic component. In addition, the acryl-based monomers may contain one type of acrylic component alone, or may contain two or more types of acrylic components.

Among the acryl-based resin, an acrylic copolymer containing as a monomer at least one of methacrylic acid or a derivative thereof, and an acrylic compound having a polar group is preferable. By using the acrylic copolymer containing these monomers, high rate characteristics can be further improved. As the methacrylic acid or the derivative thereof, methacrylic acid, methyl methacrylate, ethyl methacrylate, isopropyl methacrylate, and the like can be mentioned. As the acrylic compound having a polar group, acrylonitrile, methacrylonitrile, acrylamide, methacrylamide, and the like can be mentioned. Here, among the acrylic compound having a polar group, acrylic compound having an amide group is preferable. As the acrylic compound having an amide group, acrylamide, N-methyrol acrylamide, diacetone acrylamide and the like can be mentioned.

The weight average molecular weight of the acryl-based resin is, for example, 30,000 to 1,000,000, and more particularly, 30,000, 40,000, 50,000, 60,000, 70,000, 80,000, 90,000, 100,000, 150,000, 200,000, 300,000, 400,000, 500,000, 600,000, 700,000, 800,000, 900,000, 1,000,000. The weight average molecular weight may be in the range of two values selected from the values exemplified above. When the molecular weight is too small, flexibility of the resin layer becomes low, causing cracks in the resin layer when the current collector is winded with a small radius of curvature. This would result in low capacity of the battery. On the other hand, when the molecular weight is too large, adhesion tends to lower.

### <Soluble Nitrocellulose-based Resin>

In the present invention, the soluble nitrocellulose-based resin is a resin containing a soluble nitrocellulose as a resin component. Here, the soluble nitrocellulose-based resin may contain only the soluble nitrocellulose, or may contain a resin other than the soluble nitrocellulose. The soluble nitrocellulose is one type of cellulose which is a polysaccharide, and is characterized by possessing a nitro group. Although soluble nitrocellulose is a cellulose having a nitro group, in contrast with other celluloses such as CMC and the like, the soluble nitrocellulose is not widely used in electrodes, and have been conventionally used as a raw material of resin film or coatings.

The inventors of the present invention have found that high rate characteristics of a non-aqueous electrolyte battery can be greatly improved by first obtaining a soluble nitrocellulose-based resin composition by dispersing a conductive material in this soluble nitrocellulose, and then forming a resin layer containing the soluble nitrocellulose-based resin and the conductive material on the conductive substrate. The Nitrogen density of the soluble nitrocellulose used in the present invention is 10 to 13%, especially preferably 10.5 to 12.5%. When the Nitrogen density is too low, dispersion may not be sufficient depending on the type of conductive material. When the Nitrogen density is too high, the soluble nitrocellulose becomes chemically unstable, which would be dangerous when used for batteries. The Nitrogen density depends on the number of nitro group, and thus the Nitrogen density can be adjusted by adjusting the number of the nitro group. In addition, the viscosity of the soluble nitrocellulose is usually in the range of 1 to 6.5 second, preferably 1.0 to 6 seconds when observed by JIS K-6703. The acid content is preferably 0.006% or lower, especially preferably 0.005% or lower. When these values are not in such range, dispersibility of the conductive material and the battery characteristics may degrade.

The soluble nitrocellulose-based resin of the present invention may contain the soluble nitrocellulose by 100 mass% (when the entire resin component is taken as 100 mass%), or other resin component may be used in combination. When the other resin component is used in combination, it is preferable that the soluble nitrocellulose is contained by 40 mass% or more, more preferably 50 mass% or more, 90 mass% or less, and particularly 80 mass% or less, with respect to the total resin component. Particular ratio of the soluble nitrocellulose is, for example, 40, 45, 50, 55, 60, 65, 70, 75, 80, 85, 90 mass%, and may be in the range of two values selected from the values exemplified above. Through an investigation conducted for the internal resistance of the conductive resin layer prepared by adding a conductive material to various resins, it became apparent that when the soluble nitrocellulose is contained by 50 mass% or more, the resistance of the resin layer can be greatly reduced, sufficient high rate characteristics can be obtained, adhesion becomes superior, and the lifetime of the product can be elongated. On the other hand, when the amount of soluble nitrocellulose formulated is too small, improvement in dispersibility of the conductive material, which is obtained as an effect of formulating the soluble nitrocellulose, may not be obtained. It is assumed that addition of 40 mass% or more of the soluble nitrocellulose can sufficiently lower the resistance of the resin layer.

The soluble nitrocellulose-based resin according to the present invention may be prepared by adding various resin to the afore-mentioned soluble nitrocellulose. In the present invention, battery performance (including capacitor performance, hereinafter the same) was investigated to find that it is preferable to add a melamine-based resin, an acryl-based resin, a polyacetal-based resin, or an epoxy-based resin in combination. By such addition, the battery performance can be improved to a level equal to or higher than the case where the soluble nitrocellulose is used as a resin component by 100 mass%. Each of the resin components will be described hereinafter.

It is assumed that the hardenability of the resin is improved, adhesion with the conductive substrate is improved, and the battery performance is improved, since the afore-mentioned melamine-based resin undergoes a hardening reaction with the soluble nitrocellulose. The amount of the melamine-based resin being added shall be, 5 to 200 mass%, more preferably 10 to 150 mass%, when the soluble nitrocellulose as the resin component is taken as 100 mass%. When the amount added is less than 5 mass%, the effect is low. When the amount added exceeds 200 mass%, hardening reaction overly proceeds and the resin layer becomes too hard. This would cause detachment during the manufacture of batteries, and there may be a case where the discharge rate characteristics decrease. As the melamine-based resin, butylated melamine, isobutylated melamine, methylated melamine and the like can be preferably used for example. The number average molecular weight of the melamine-based resin is, for example, 500 to 50,000, particularly for example 500, 1,000, 2,000, 2,500, 3,000, 4,000, 5,000, 10,000, 20,000, or 50,000. The number average molecular weight may be in the range of two values selected from the values exemplified above.

The afore-mentioned acryl-based resin has superior adhesion with a conductive substrate, especially with aluminum and copper. Therefore, addition of the acryl-based resin can improve the adhesion of the soluble nitrocellulose-based resin with the conductive substrate. The amount of the acryl-based resin being added shall be, 5 to 200 mass%, more preferably 10 to 150 mass%, when the soluble nitrocellulose as the resin component is taken as 100 mass%. When the amount added is less than 5 mass%, the effect is low. When the amount added exceeds 200 mass%, adverse effect is caused on the dispersibility of the conductive material. This may lead to a case where the discharge rate characteristics decrease. As the acryl-based resin, a resin containing acrylic acid, methacrylic acid, and derivatives thereof as a main component, or an acrylic copolymer including such monomers can preferably be used. In particular, methyl acrylate, ethyl acrylate, methyl methacrylate, isopropyl methacrylate and their copolymer can be used. In addition, acryl-based compounds having a polar group, such as acrylonitrile, methacrylonitrile, acryl amide, methacryl amide and the like, and a copolymer thereof can preferably be used. The weight average molecular weight of the acryl-based resin is, for example, 30,000 to 1,000,000, particularly for example 30,000, 40,000, 50,000, 60,000, 70,000, 80,000, 90,000, 100,000, 150,000, 200,000, 300,000, 400,000, 500,000, 600,000, 700,000, 800,000, 900,000, or 1,000,000. The weight average molecular weight may be in the range of two values selected from the values exemplified above.

The afore-mentioned polyacetal-based resin is superior in compatibility with the soluble nitrocellulose. Therefore, suitable flexibility can be provided to the resin layer, and thus adhesion with the active material layer can be improved. The amount of the polyacetal-based resin being added shall be, 5 to 200 mass%, more preferably 20 to 150 mass%, when the soluble nitrocellulose as the resin component is taken as 100 mass%. When the amount added is less than 5 mass%, the effect is low. When the amount added exceeds 200 mass%, adverse effect is caused on the dispersibility of the conductive material. This may lead to a case where the discharge rate characteristics decrease. As the polyacetal-based resin, polyvinylbutyral, polyacetoacetal, polyvinylacetoacetal and the like can preferably be used. The weight average molecular weight of the polyacetal-based resin is, for example, 10,000 to 500,000, particularly for example 10,000, 20,000, 30,000, 40,000, 50,000, 60,000, 70,000, 80,000, 90,000, 100,000, 150,000, 200,000, or 500,000. The weight average molecular weight may be in the range of two values selected from the values exemplified above.

Since the afore-mentioned epoxy-based resin is superior in adhesion with the conductive substrate, the adhesion with the conductive substrate can be further improved by adding the epoxy-based resin. The amount of the epoxy-based resin being added shall be, 5 to 200 mass%, more preferably 10 to 150 mass%, when the soluble nitrocellulose as the resin component is taken as 100 mass%. When the amount added is less than 5 mass%, the effect is low. When the amount added exceeds 200 mass%, adverse effect is caused on the dispersibility of the conductive material. This may lead to a case where the discharge rate characteristics decrease. As the epoxy-based resin, glycidyl ether type resins such as bisphenol A type epoxy resin, bisphenol F type epoxy resin, tetramethylbiphenyl type and the like are preferable. The weight average molecular weight of the epoxy-based resin is, for example, 300 to 50,000, particularly for example 300, 500, 1,000, 2, 000, 3,000, 4,000, 5,000, 10,000, 20,000, or 50,000. The weight average molecular weight may be in the range of two values selected from the values exemplified above.

In the present invention, the soluble nitrocellulose based resin may contain the soluble nitrocellulose by 100% as the resin component, as described above. Here, it is more preferable that at least one type of the afore-mentioned acryl-based resin and the polyacetal-based resin, the melamine-based resin, and the soluble nitrocellulose are contained. By such combination, the discharge rate characteristics and the long life characteristics of the battery becomes particularly superior.

In addition, particularly when the total amount of the acryl-based resin, polyacetal-based resin, melamine-based resin, and the soluble nitrocellulose is taken as 100 mass%, it is further preferable that the amount of melamine-based resin is 5 to 55 mass%, and the amount of soluble nitrocellulose is 40 to 90 mass%. The amount of the acryl-based resin or the polyacetal-based resin to be formulated is the resulting amount when the amount of the melamine-based resin and the soluble nitrocellulose formulated is deducted from 100 mass%. In such case, the discharge rate characteristics and the long life characteristics of the battery becomes further superior. The amount of the melamine-based resin to be formulated is, in particular, 5, 10, 15, 20, 25, 30, 35, 40, 45, 50, or 55 mass%. The amount may be in the range of two values selected from the values exemplified above. The amount of the soluble nitrocellulose to be formulated is, in particular, 40, 45, 50, 55, 60, 65, 70, 75, 80, 85, or 90 mass%. The amount may be in the range of two values selected from the values exemplified above.

### <Chitosan-based Resin>

In the present invention, the chitosan-based resin is a resin including a chitosan derivative as the resin component. As the chitosan-based resin, a resin including a chitosan derivative by 100 mass% can be used, however, other resin component can be used in combination. When the other resin is used in combination, it is preferable that the chitosan derivative is contained by 50 mass% or higher, more preferably 80 mass% or higher with respect to the total resin component. Preferable chitosan derivative is, for example, hydroxy alkyl chitosan, more particularly hydroxyl ethyl chitosan, hydoroxy propyl chitosan, hydroxyl butyl chitosan, grycerylated chitosan. Grycerylated chitosan is particularly preferable.

The chitosan-based resin preferably contains an organic acid. As the organic acid, pyromellitic acid, terephthalic acid and the like can be mentioned. The amount of the organic acid added is preferably 20 to 300 mass% with respect to the 100 mass% of the chitosan derivative, and is more preferably 50 to 150 mass%. When the amount of organic acid added is too small, the hardening of the chitosan derivative becomes insufficient. When the amount of organic acid added is too large, flexibility of the resin layer degrades.

The weight average molecular weight of the chitosan-based resin is, for example, 30,000 to 500,000, particularly for example 30,000, 40,000, 50,000, 60,000, 70,000, 80,000, 90,000, 100,000, 150,000, 200,000 or 500,000. The weight average molecular weight may be in the range of two values selected from the values exemplified above. The weight average molecular weight is obtained by GPC (gel permeation chromatography).

### <Conductive Material>

The conductive resin layer of the present invention is provided in between the conductive substrate and the active material layer of the electrode material layer. The conductive resin layer functions as a pathway of electrons which moves between the conductive substrate and the active material layer of the electrode material layer, and thus electron conductivity is required. Since the soluble nitrocellulose-based resin itself is high in insulation properties, conductive material must be formulated in order to impart the electron conductivity. As the conductive material used in the present invention, publicly known carbon powder, metal powder and the like can be used. Here, among them, carbon powder is preferable. As the carbon powder, acetylene black, Ketjen black, furnace black, carbon nanotube and the like can be used. The amount of the conductive material to be added is preferably 20 to 80 mass% with respect to 100 mass% of the resin component of the soluble nitrocellulose-based resin (solid content, hereinafter the same). When the added amount is less than 20 mass%, the volume resistivity of the resin layer becomes high, and when the added amount exceeds 80 mass%, the adhesion with the conductive substrate lowers. Conventional methods can be used to disperse the conductive material into the resin component solution of the soluble nitrocellulose-based resin. For example, the conductive material can be dispersed by using a planetary mixer, a ball mill, a homogenizer, and the like.

### <Water Contact Angle>

The water contact angle of the resin layer surface according to the present invention is 30 degrees or more and 105 degrees or less when the resin contained in the resin layer is the acryl-based resin, 100 degrees of more and 110 degrees or less when the resin is the soluble nitrocellulose-based resin, and 20 degrees or more and 50 degrees or less when the resin is the chitosan-based resin. In the present specification, water contact angle is a value obtained by θ/2 method in a thermostatic chamber at 23°C. The water contact angle can be obtained by using a contact angle meter. After forming a resin layer on the current collector, a few micro liters of pure water is adhered as a droplet onto its surface, and then the water contact angle is measured. Since the surface tension of the water varies by the change in temperature, the water contact angle is measured in a thermostatic chamber at 23°C.

When the conductive material is merely added to the resin to form the resin layer, there are cases where sufficient adhesion at the interface of the conductive substrate and the resin layer, interface of the resin layer and the active material layer, or the interface of the resin layer and the electrode material layer cannot be obtained. This is since the state of the resin layer changes depending on the type of the resin and the conditions for forming the resin layer. Here, contact angle, which shows the wettability of a liquid, is a surface texture that possesses a large influence to the adhesion. Therefore, by obtaining the contact angle of water, which has relatively large surface tension, adhesion of the current collector and active material layer of the electrode material layer formed thereon can be evaluated. In this case, regarding the resin layer and the water contact angle, it may seem that the smaller the water contact angle is, the more the adhesion improves, and the more the discharge rate can be improved. However, when the contact angle is too small, there is a possibility that adverse effect is caused on the adhesion of the conductive substrate and on the discharge rate characteristics. Therefore, it is necessary to regulate the water contact angle in the present invention. This issue will also be discussed later.

As a result of measuring the water contact angle by forming resin layers in accordance with various conditions, it became apparent that when the water contact angle is kept below a particular upper limit, sufficient adhesion with the active material layer and the electrode material layer can be obtained. In addition, as a result of conducting an investigation on the relation between the conductive substrate and the adhesion of the resin layer by forming resin layers having a different water contact angle, it became apparent that when the water contact angle of the surface of the resin layer is below a particular lower limit, the high rate characteristics degrade. The reasons for such results are not clear, however, it is assumed that such difference is due to the subtle difference in the adhesion state of the conductive substrate and the resin layer. Therefore, it is necessary that the water contact angle is more than the afore-mentioned lower limit. As described, the regulation of the water contact angle according to the present invention has been made in view of not only the adhesion of the resin with the active material layer or the electrode material layer, but also in view of the adhesion of the conductive substrate with the resin layer. The current collector of the present invention thus regulated with its water contact angle can suitably provide high rate characteristics when used as an electrode structure for batteries and electric-charged parts.

The current collector of the present invention can be obtained by forming a resin layer on at least one side of the conductive substrate, such as the afore-mentioned aluminum foil and the like. This can be achieved by a conventional method, however, it is necessary that the resin layer has the afore-mentioned water contact angle. For example, when the resin layer is formed by coating, the temperature and the time for baking have an influence on the water contact angle. The baking temperature, as the final temperature of the conductive substrate, is preferably 90 to 230°C, and the baking time is preferably 10 to 60 seconds. When the resin layer is formed with such conditions, the water contact angle at its surface can be adjusted within the afore-mentioned range. Here, since the water contact angle is determined as an overall outcome of various factors such as resin composition, resin density in the resin solution, baking temperature, baking time, baking method and the like, the water contact angle may come out of the afore-mentioned range even when the baking temperature and the baking time are within the afore-mentioned range. In addition, there may be a case where the water contact angle comes within the afore-mentioned range, even when the baking temperature and the baking time are not within the afore-mentioned range.

In general, the water contact angle tends to become large as the baking temperature is raised and the baking time is made longer. Therefore, in order to obtain a resin layer having the water contact angle within the afore-mentioned range, the resin layer is formed with a particular condition first, and then the water contact angle of the resin layer thus formed is measured. When the water contact angle measured is smaller than the afore-mentioned lower limit, the baking temperature is raised or the baking time is made longer. When the water contact angle measured is larger than the afore-mentioned upper limit, the baking temperature is reduced or the baking time is made shorter. Accordingly, the conditions are adjusted. The value of the water contact angle cannot be determined merely by the composition of the resin and the baking temperature, however, the water contact angle can be adjusted to the desired value by conducting several trial and errors, when the afore-mentioned method is used.

By using the current collector of the present invention, sufficient adhesion at the interface of the resin layer and the active material layer or in the interface of the resin layer and the electrode material layer can be obtained even when the active material layer or the electrode material layer is formed and is immersed in an electrolyte. In addition, sufficient adhesion can be obtained at the interface of the resin layer and the conductive substrate. Further, large detachment is not observed even after charge and discharge is repeated. Accordingly, a current collector having sufficient adhesion and superior discharge rate characteristics, with elongated life time, can be obtained.

In the present invention, the thickness of the conductive resin layer is not particularly limited, however, the thickness is preferably 0.1 µm or more and 5 µm or less, more preferably 0.3 µm or more and 3 µm or less. When the thickness is less than 0.1 µm, unevenness is observed during the formation of the conductive resin layer, generating portions where the conductive substrate cannot be coated, resulting in insufficient battery characteristics. On the other hand, when the thickness exceeds 5 µm, the active material layer or the electrode material layer must be made thin for such excess in the thickness when applied to the non-aqueous electrolyte battery or the capacitor member described later. Therefore, there are cases where sufficient capacity density cannot be obtained. In addition, concerning the application in lithium ion secondary battery, when the electrode structure is wound together with a separator, cracks are formed in the resin layer at the inner portions of winding having an extremely small radius of curvature. This would lead to generation of detachment and degrades the performance of the non-aqueous electrolyte battery or the capacitor member.

The manufacturing method of the current collector according to the present invention is not particularly limited, however, it is effective to perform a conventional pretreatment to the conductive substrate itself, in order to improve the adhesion of the surface of the conductive substrate. In particular, when a conductive substrate of aluminum or the like manufactured by rolling is used, there are cases where rolling oil and wear debris are left on the surface. In such cases, adhesion can be improved by removing them. In addition, adhesion can be improved by performing a dry activation treatment such as corona discharge treatment.

### <Electrode Structure>

By forming an active material layer or an electrode material layer on at least one side of the current collector of the present invention, the electrode structure of the present invention can be obtained. The electrode structure for the capacitor member formed with the electrode material layer will be described later. First, in the case of an electrode structure with an active material layer formed thereon, this electrode structure can be used with a separator, non-aqueous electrolyte solution and the like to manufacture an electrode structure (including parts for batteries) for a non-aqueous electrolyte battery, such as a lithium ion secondary battery. In the electrode structure for the non-aqueous electrolyte battery and the non-aqueous electrolyte battery of the present invention, conventional parts for non-aqueous electrolyte battery can be used for the parts other than the current collector. Here, in the present invention, the active material layer formed as the electrode structure may be the ones conventionally proposed for the non-aqueous electrolyte battery. For example, positive electrode structure of the present invention can be obtained by coating with a paste the current collector of the present invention which uses aluminum, followed by drying. Here, the paste for the positive electrode structure is obtained by using LiCoO₂, LiMnO₂, LiNiO₂ and the like as an active material and using carbon black such as acetylene black and the like as a conductive material, and dispersing the active material and the conductive material in PVDF as a binder. A negative electrode structure of the present invention can be obtained by coating an active material layer forming material with a paste, followed by drying. The current collector for the negative electrode of the present invention uses copper. Here, the paste for the negative electrode structure is obtained by using graphite (black lead), graphite, mesocarbon microbead and the like as an active material, dispersing the active material in CMC as a thickening agent, and then mixing the resulting dispersion with SBR as a binder.

### Non-aqueous Electrolyte Battery

The present invention may be a non-aqueous electrolyte battery. In such case, there is no particular limitation except that the current collector of the present invention is used. For example, the non-aqueous electrolyte battery of the present invention can be obtained by sandwiching a separator immersed in an electrolyte solution for non-aqueous electrolyte battery containing non-aqueous electrolyte, in between the afore-mentioned positive electrode structure and the negative electrode structure having the current collector of the present invention as a structure component. As the non-aqueous electrolyte and the separator, the conventional ones for non-aqueous electrolyte battery can be used. The electrolyte solution can use carbonates, lactones or the like as a solvent. For example, LiPF₆ or LiBF₄ as an electrolyte can be dissolved in a mixture of EC (ethylene carbonate) and EMC (ethyl methyl carbonate) and used. As the separator, a membrane made of polyolefin having microporous can be used for example.

### Capacitor Member (Electrical Double Layer Capacitor, Lithium Ion Capacitor and the Like)

Regarding the electrical double layer capacitor, lithium ion capacitor and the like of the present invention , the current collector of the present invention can be applied to a capacitor member of an electrical double layer capacitor, lithium ion capacitor and the like, which require charge and discharge with a large current density at high speed. The electrode structure for the capacitor member of the present invention can be obtained by forming an electrode material layer on the current collector of the present invention. The capacitor member for the electrical double layer capacitor, lithium ion capacitor and the like can be manufactured with the obtained electrode structure, a separator, and an electrolyte solution. In the electrode structure and the capacitor member of the present invention, conventional parts for the electrical double layer capacitor and lithium ion capacitor can be used for the parts other than the current collector.

The electrode material layers of the positive electrode and the negative electrode can both be structured with an electrode material, a conductive material, and a binder. In the present invention, the capacitor member can be obtained by first forming the afore-mentioned electrode material layer onto at least one side of the current collector of the present invention to give the electrode structure. Here, as the electrode material, the ones conventionally used as the electrode material for the electrical double layer capacitor or for the lithium ion capacitor, can be used. For example, carbon powders such as activated charcoal and graphite (black lead), and carbon fibers can be used. As the conductive material, carbon blacks such as acetylene black and the like can be used. As the binder, PVDF (polyvinylidene fluoride) and SBR (styrene butadiene rubber) can be used for example. In addition, the capacitor member of the present invention can construct an electrical double layer capacitor or a lithium ion capacitor by fixing a separator in between the electrode structures of the present invention, and then immersing the separator in the electrolyte solution. As the separator, a membrane made of polyolefin having microporous, a non-woven fabric for an electrical double layer capacitor, and the like can be used for example. Regarding the electrolyte solution, carbonates and lactones can be used as the solvent for example, and tetraethylammonium salt, triethylmethylammonium salt and the like can be used as the electrolyte, and hexafluorophosphate, tetrafluoroborate and the like can be used as the negative ion. Lithium ion capacitor is structured by combining a positive electrode of a lithium ion battery and a positive electrode of an electrode double layer capacitor. There is no particular limitation with respect to the manufacturing method, except that the current collector of the present invention is used.

### Examples

Examples in which the current collector of the present invention was applied to a lithium ion battery, will be explained hereinafter.

### 1. Aluminum Alloy Foil

Aluminum alloys having compositions designated in Table 1 were subjected to casting using semi-continuous casting to prepare ingots with a thickness of 500 mm. Next, those ingots were subjected to surface finishing, followed by homogenizing treatment under conditions designated in Table 1. Then, cold rolling was performed to produce sheets with a thickness of 0.8 mm. Subsequently, intermediate annealing was performed at 440°C for 3 hours, followed by cold rolling and foil rolling to give an aluminum alloy foil with a thickness of 12 µm or 15 µm.

### <Tensile Strength>

The tensile strength of the aluminum alloy foil which had been cut out in a direction of the rolling was measured with an Instron tension tester AG-10kNX, manufactured by Shimadzu Corporation. The measurement was performed under conditions with a test piece size of 10 mm x 100 mm, at a chuck distance of 50 mm, and at a crosshead speed of 10 mm/min. In addition, in order to simulate the drying step, heat treatment at 120°C for 24 hours, at 140°C for 3 hours, or at 160°C for 15 minutes was carried out. Then, the aluminum alloy foil was cut out in a direction of the rolling. After that, the tensile strength was measured in the same manner as in the above. The tensile strength of 180 MPa or higher was considered acceptable and the tensile strength of less than 180 MPa was determined as unacceptable. With regard to the tensile strength after the heat treatment at 120°C for 24 hours, at 140°C for 3 hours, or at 160°C for 15 minutes, the tensile strength of 170 MPa or higher was considered acceptable and the tensile strength of less than 170 MPa was determined as unacceptable.

### <0.2% Yield Strength>

Likewise, a tension test was conducted to determine 0.2% yield strength from a stress/strain curve. The 0.2% yield strength of 160 MPa or higher was considered acceptable and the 0.2% yield strength of less than 160 MPa was determined as unacceptable. With regard to the 0.2% yield strength after the heat treatment at 120°C for 24 hours, at 140°C for 3 hours, or at 160°C for 15 minutes, the 0.2% yield strength of 150 MPa or higher was considered acceptable and the 0.2% yield strength of less than 150 MPa was determined as unacceptable.

### <Electrical Conductivity>

With regard to electrical conductivity, electrical resistivity was measured by a four-terminal method, and was converted to electrical conductivity. The electrical conductivity of 60% IACS or higher was considered acceptable and the electrical conductivity of less than 60% IACS was determined as unacceptable.

### 2. Formation of Resin Layer

Resin layer was formed on the afore-mentioned aluminum alloy foil by the following method.

### (Examples 1 to 6, Examples 11 to 16, Comparative Examples 1 to 2, Comparative Examples 4 to 5, Comparative Examples 11 to 12)

An acryl copolymer containing acrylic acid, butyl acrylate, and methyl acrylate as the monomer by a formulation ratio of 5:45:50 was polymerized so that the weight average molecular weight reaches 100,000. Then, the resin was dispersed in water by using a surfactant to give a resin solution. Acetylene black was added to the resin solution by 60 mass% with respect to the solid content of the resin. The mixture was then dispersed with a ball mill for 8 hours to give a coating material. The coating material thus obtained was coated on one side of the aluminum foil shown in Table 1 (JIS A1085) using a bar coater, and then the coating was heated for 30 seconds so that the final temperature of the substrate reaches the temperature shown in Table 2. The current collector was obtained accordingly. The thickness of the current collector after baking was 2 µm. This heating was conducted in a thermostatic chamber.

A paste obtained by dispersing lithium iron phosphate (LiFePO₄) as the active material and acetylene black as the conductive material in PVDF (polyvinylidene fluoride) as the binder was applied on the afore-mentioned current collector with a sequential coating-drying machine. Here, existence of cuts in the foil was checked. Then, roll press was performed to increase the density of the active material to obtain a positive electrode structure with a final thickness of 70 µm. A paste obtained by dispersing graphite (black lead) in CMC (carboxymethylcellulose) and then mixing the dispersion with SBR (styrene butadiene rubber) as the binder was applied on a copper foil with a thickness of 20 µm with a sequential coating-drying machine. Application was performed so that the thickness would be 70 µm. Accordingly, a negative electrode structure was obtained. A microporous separator made of polypropylene was sandwiched by these electrode structures, and was then cased in the battery casing to obtain a coin battery of 2032 type. A 1 mol/L solution of LiPF₆ in EC (ethylene carbonate) and EMC (ethylmethyl carbonate) was used as the electrolyte solution.

### (Examples 7 to 8, Examples 17 to 18, Comparative Examples 6 to 7, Comparative Examples 13 to 14)

A resin solution was prepared by dissolving 80 mass% of soluble nitrocellulose (JIS K6703L1/4) as the main resin (here, the weight of the soluble nitrocellulose is a weight obtained by subtracting the weight of the wetting agent), and 20 mass% of butyl etherified melamine (number average molecular weight of 2700) as the hardening agent, in an organic solvent of methyl ethyl ketone (MEK). Then, acetylene black was added to the resin solution by 60 mass% with respect to the solid content (by solids of the resin, hereinafter the same) of the resin. The mixture was then dispersed with a ball mill for 8 hours to give a coating material. The coating material thus obtained was coated on one side of the aluminum foil shown in Table 1 (JIS A1085) using a bar coater, and then the coating was heated for 30 seconds so that the final temperature of the substrate reaches the temperature shown in Table 2. The current collector was obtained accordingly. The thickness of the current collector after baking was 2 µm. This heating was conducted in a thermostatic chamber. Other conditions were the same as Example 1, and thus a coin battery was prepared.

### (Examples 9 to 10, Examples 19 to 20, Comparative Examples 8 to 9, Comparative Examples 15 to 16)

A resin solution was prepared by dissolving 50 mass% of hydroxyalkyl chitosan (weight average molecular weight of 80,000) as the main resin, and 50 mass% of pyromellitic acid as the hardening agent in an organic solvent of normal methyl 2-pyrrolidone (NMP). Then, acetylene black was added to the resin solution by 60 mass% with respect to the solid content (by solids of the resin, hereinafter the same) of the resin. The mixture was then dispersed with a ball mill for 8 hours to give a coating material. The coating material thus obtained was coated on one side of the aluminum foil shown in Table 1 (JIS A1085) using a bar coater, and then the coating was heated for 30 seconds so that the final temperature of the substrate reaches the temperature shown in Table 2. The current collector was obtained accordingly. The thickness of the current collector after baking was 2 µm. This heating was conducted in a thermostatic chamber. Other conditions were the same as Example 1, and thus a coin battery was prepared.

### (Comparative Example 3, Comparative Example 10)

A resin solution was prepared by dissolving epoxy resin (weight average molecular weight of 2,900) and melamine resin (butylated melamine, number average molecular weight of 2,700) with a formulation ratio of 95:5 in methyl ethyl ketone (MEK). Then, acetylene black was added to the resin solution by 60 mass% with respect to the solid content of the resin. The mixture was then dispersed with a ball mill for 8 hours to give a coating material. The coating material thus obtained was coated on one side of the aluminum foil shown in Table 1 (JIS A1085) using a bar coater, and then the coating was heated for 15 seconds so that the final temperature of the substrate reaches the temperature shown in Table 2. The current collector was obtained accordingly. The thickness of the current collector after baking was 2 µm. This heating was conducted in a thermostatic chamber. Other conditions were the same as Example 1, and thus a coin battery was prepared.

The thickness of the conductive resin layers formed on the current collectors, water contact angle of the conductive resin layers, occurrence of cuts during the active-material-application step, adhesion between the substrate and the resin layer, adhesion between the resin layer and the active material layer, and discharge rate characteristics of the coin battery were investigated. The results are shown in Table 2.

### <Thickness of Resin Layer>

Regarding the thickness of the resin layer, film thickness measuring machine "HAKATTARO G" (available from SEIKO-em) was used to calculate the thickness of the resin layer as a difference in the thickness between the portion formed with the resin layer and the portion without the resin (portion only with the aluminum foil).

### <Water Contact Angle>

Water contact angle was obtained using a contact angle meter (Drop Master DM-500, available from Kyowa Interface Science Co.,LTD.). First, 1 µl of water droplets were adhered on the surface of the resin layer in a thermostatic chamber at 23°C, and then the contact angle after 2 seconds was measured by θ/2 method.

### <Whether or Not Cut Occurs During Active-material-application Step>

Whether or not a cut occurred in a positive electrode material applied during an active-material-application step was visually inspected. The case without a cut was considered acceptable, and the case with a cut was determined as unacceptable.

### <Adhesion Between Substrate and Resin Layer>

Adhesion was evaluated as follows. Cellotape (available from NICHIBAN CO., LTD.) was attached onto the surface of the resin layer, and was firmly pressed. Subsequently, Cellotape was peeled off at once, and then the conditions of detachment was observed visually. When there was no detachment, the result was judged as GOOD. When the detachment area was 90% or less, the result was judged as FAIR. When the detachment area exceeded 90%, the result was judged as POOR.

### <Adhesion Between Resin Layer and Active Material Layer (Whether or Not Active Material Detaches) >

The presence or absence of the active material detachment was visually inspected. When no detachment occurred, the case was considered acceptable. When at least some detachment occurred, the case was determined as unacceptable.

### <Discharge Rate Characteristics>

Discharge rate characteristics was measured as follows. Discharge capacity (based on 0.2C, unit %) was measured for the discharge current of 1C, 5C, 10C, and 20C, when the upper voltage limit of charged state was 3.4 V, charge current was 0.2C, discharge final voltage was 2.0 V, and the temperature was 25°C. (Here, 1C is the value of the current (A) when the current capacity (Ah) of the battery is taken out in 1 hour (h)). At 20C, the current capacity of the battery can be taken out in 1/20h = 3 min. On the other hand, the battery can be charged in 3 minutes.)

The results obtained are shown in Table 2.

**[Table 1]**

| | Strength of Aluminum Foil | Chemical Component(mass.%) | | | | Homogenizaton Treatment Conditions | | Thickness of Current Collector Al Foil |
|---|---|---|---|---|---|---|---|---|
| | | Si | Fe | Cu | Al | Temperature (°C) | Time (hr) | (µm) |
| Ex. 1 | High | 0.08 | 0.06 | 0.0001 | Rest | 620 | 3 | 12 |
| Ex. 2 | High | 0.08 | 0.06 | 0.0001 | Rest | 620 | 3 | 12 |
| Ex. 3 | High | 0.08 | 0.06 | 0.0001 | Rest | 620 | 3 | 12 |
| Ex. 4 | High | 0.08 | 0.06 | 0.0001 | Rest | 620 | 3 | 12 |
| Ex. 5 | High | 0.08 | 0.06 | 0.0001 | Rest | 620 | 3 | 12 |
| Ex. 6 | High | 0.08 | 0.06 | 0.0001 | Rest | 620 | 3 | 12 |
| Ex. 7 | High | 0.08 | 0.06 | 0.0001 | Rest | 620 | 3 | 12 |
| Ex. 8 | High | 0.08 | 0.06 | 0.0001 | Rest | 620 | 3 | 12 |
| Ex. 9 | High | 0.08 | 0.06 | 0.0001 | Rest | 620 | 3 | 12 |
| Ex. 10 | High | 0.08 | 0.06 | 0.0001 | Rest | 620 | 3 | 12 |
| Ex. 11 | High | 0.13 | 0.43 | 0.02 | Rest | 620 | 3 | 12 |
| Ex. 12 | High | 0.13 | 0.43 | 0.02 | Rest | 620 | 3 | 12 |
| Ex. 13 | High | 0.13 | 0.43 | 0.02 | Rest | 620 | 3 | 12 |
| Ex. 14 | High | 0.13 | 0.43 | 0.02 | Rest | 620 | 3 | 12 |
| Ex. 15 | High | 0.13 | 0.43 | 0.02 | Rest | 620 | 3 | 12 |
| Ex. 16 | High | 0.13 | 0.43 | 0.02 | Rest | 620 | 3 | 12 |
| Ex. 17 | High | 0.13 | 0.43 | 0.02 | Rest | 620 | 3 | 12 |
| Ex. 18 | High | 0.13 | 0.43 | 0.02 | Rest | 620 | 3 | 12 |
| Ex. 19 | High | 0.13 | 0.43 | 0.02 | Rest | 620 | 3 | 12 |
| Ex. 20 | High | 0.13 | 0.43 | 0.02 | Rest | 620 | 3 | 12 |
| | | | | | | | | |
| Comp. Ex. 1 | Low | 0.04 | 0.05 | 0.0015 | Rest | 500 | 3 | 15 |
| Comp. Ex. 2 | Low | 0.04 | 0.05 | 0.0015 | Rest | 500 | 3 | 12 |
| Comp. Ex. 3 | High | 0.08 | 0.06 | 0.0001 | Rest | 620 | 3 | 12 |
| Comp. Ex. 4 | High | 0.08 | 0.06 | 0.0001 | Rest | 620 | 3 | 12 |
| Comp. Ex. 5 | High | 0.08 | 0.06 | 0.0001 | Rest | 620 | 3 | 12 |
| Comp. Ex. 6 | High | 0.08 | 0.06 | 0.0001 | Rest | 620 | 3 | 12 |
| Comp. Ex. 7 | High | 0.08 | 0.06 | 0.0001 | Rest | 620 | 3 | 12 |
| Comp. Ex. 8 | High | 0.08 | 0.06 | 0.0001 | Rest | 620 | 3 | 12 |
| Comp. Ex. 9 | High | 0.08 | 0.06 | 0.0001 | Rest | 620 | 3 | 12 |
| Comp. Ex. 10 | High | 0.13 | 0.43 | 0.02 | Rest | 620 | 3 | 12 |
| Comp. Ex. 11 | High | 0.13 | 0.43 | 0.02 | Rest | 620 | 3 | 12 |
| Comp. Ex. 12 | High | 0.13 | 0.43 | 0.02 | Rest | 620 | 3 | 12 |
| Comp. Ex. 13 | High | 0.13 | 0.43 | 0.02 | Rest | 620 | 3 | 12 |
| Comp. Ex. 14 | High | 0.13 | 0.43 | 0.02 | Rest | 620 | 3 | 12 |
| Comp. Ex. 15 | High | 0.13 | 0.43 | 0.02 | Rest | 620 | 3 | 12 |
| Comp. Ex. 16 | High | 0.13 | 0.43 | 0.02 | Rest | 620 | 3 | 12 |

**[Table 2]**

| | Original Sheet Strength | | Electrical Conductivity (%IACS) | Heating at 120°C for 24 Hours | | Heating at 140°C for 3 Hours | | Heating at 160°C for 15 Minutes | | Thickness of Positive Electrode Mixture layer | Thickness of Entire Positive Electrode |
|---|---|---|---|---|---|---|---|---|---|---|---|
| | Tensile Strength (N/mm²) | 0.2% Yield Strength (N/mm²) | | Tensile Strength (N/mm²) | 0.2% Yield Strength (N/mm²) | Tensile Strength (N/mm²) | 0.2% Yield Strength (N/mm²) | Tensile Strength (N/mm²) | 0.2% Yield Strength (N/mm²) | µm | µm |
| Ex. 1 | 190 | 170 | 60.3 | 188 | 168 | 185 | 165 | 180 | 162 | 58 | 70 |
| Ex. 2 | 190 | 170 | 60.3 | 188 | 168 | 185 | 165 | 180 | 162 | 58 | 70 |
| Ex. 3 | 190 | 170 | 60.3 | 188 | 168 | 185 | 165 | 180 | 162 | 58 | 70 |
| Ex. 4 | 190 | 170 | 60.3 | 188 | 168 | 185 | 165 | 180 | 162 | 58 | 70 |
| Ex. 5 | 190 | 170 | 60.3 | 188 | 168 | 185 | 165 | 180 | 162 | 58 | 70 |
| Ex. 6 | 190 | 170 | 60.3 | 188 | 168 | 185 | 165 | 180 | 162 | 58 | 70 |
| Ex. 7 | 190 | 170 | 60.3 | 188 | 168 | 185 | 165 | 180 | 162 | 58 | 70 |
| Ex. 8 | 190 | 170 | 60.3 | 188 | 168 | 185 | 165 | 180 | 162 | 58 | 70 |
| Ex. 9 | 190 | 170 | 60.3 | 188 | 168 | 185 | 165 | 180 | 162 | 58 | 70 |
| Ex. 10 | 190 | 170 | 60.3 | 188 | 168 | 185 | 165 | 180 | 162 | 58 | 70 |
| Ex. 11 | 235 | 185 | 59.7 | 226 | 177 | 215 | 171 | 203 | 166 | 58 | 70 |
| Ex. 12 | 235 | 185 | 59.7 | 226 | 177 | 215 | 171 | 203 | 166 | 58 | 70 |
| Ex. 13 | 235 | 185 | 59.7 | 226 | 177 | 215 | 171 | 203 | 166 | 58 | 70 |
| Ex. 14 | 235 | 185 | 59.7 | 226 | 177 | 215 | 171 | 203 | 166 | 58 | 70 |
| Ex. 15 | 235 | 185 | 59.7 | 226 | 177 | 215 | 171 | 203 | 166 | 58 | 70 |
| Ex. 16 | 235 | 185 | 59.7 | 226 | 177 | 215 | 171 | 203 | 166 | 58 | 70 |
| Ex. 17 | 235 | 185 | 59.7 | 226 | 177 | 215 | 171 | 203 | 166 | 58 | 70 |
| Ex. 18 | 235 | 185 | 59.7 | 226 | 177 | 215 | 171 | 203 | 166 | 58 | 70 |
| Ex. 19 | 235 | 185 | 59.7 | 226 | 177 | 215 | 171 | 203 | 166 | 58 | 70 |
| Ex. 20 | 235 | 185 | 59.7 | 226 | 177 | 215 | 171 | 203 | 166 | 58 | 70 |
| Comp. Ex. 1 | 193 | 172 | 63.0 | - | - | - | - | - | - | 55 | 70 |
| Comp. Ex. 2 | 158 | 140 | 63.0 | - | - | - | - | - | - | 58 | 70 |
| Comp. Ex. 3 | 190 | 170 | 60.3 | 188 | 168 | 185 | 165 | 180 | 162 | 58 | 70 |
| Comp. Ex. 4 | 190 | 170 | 60.3 | 188 | 168 | 185 | 165 | 180 | 162 | 58 | 70 |
| Comp. Ex. 5 | 190 | 170 | 60.3 | 188 | 168 | 185 | 165 | 180 | 162 | 58 | 70 |
| Comp. Ex. 6 | 190 | 170 | 60.3 | 188 | 168 | 185 | 165 | 180 | 162 | 58 | 70 |
| Comp. Ex. 7 | 190 | 170 | 60.3 | 188 | 168 | 185 | 165 | 180 | 162 | 58 | 70 |
| Comp. Ex. 8 | 190 | 170 | 60.3 | 188 | 168 | 185 | 165 | 180 | 162 | 58 | 70 |
| Comp. Ex. 9 | 190 | 170 | 60.3 | 188 | 168 | 185 | 165 | 180 | 162 | 58 | 70 |
| Comp. Ex. 10 | 235 | 185 | 59.7 | 226 | 177 | 215 | 171 | 203 | 166 | 58 | 70 |
| Comp. Ex. 11 | 235 | 185 | 59.7 | 226 | 177 | 215 | 171 | 203 | 166 | 58 | 70 |
| Comp. Ex. 12 | 235 | 185 | 59.7 | 226 | 177 | 215 | 171 | 203 | 166 | 58 | 70 |
| Comp. Ex. 13 | 235 | 185 | 59.7 | 226 | 177 | 215 | 171 | 203 | 166 | 58 | 70 |
| Comp. Ex. 14 | 235 | 185 | 59.7 | 226 | 177 | 215 | 171 | 203 | 166 | 58 | 70 |
| Comp. Ex. 15 | 235 | 185 | 59.7 | 226 | 177 | 215 | 171 | 203 | 166 | 58 | 70 |
| Comp. Ex. 16 | 235 | 185 | 59.7 | 226 | 177 | 215 | 171 | 203 | 166 | 58 | 70 |

| | Cut During Active Material Application Step | Type of Resin | Final Temperature of Substrate | Contact Angle | Adhesion Between Substrate and Resin Layer | Adhesion Between Resin Layer and Active Material Layer | Battery Capacity | Discharge Rate Characteristics (%) | | | |
|---|---|---|---|---|---|---|---|---|---|---|---|
| | | | °C | ° | | | mAh | 1C | 5C | 10C | 20C |
| Ex. 1] | No | Acryl | 200 | 105 | Good | Good | 2.64 | 99 | 69 | 59 | 45 |
| Ex. 2 | No | Acryl | 175 | 92 | Good | Good | 2.72 | 98 | 69 | 55 | 43 |
| Ex. 3 | No | Acryl | 150 | 78 | Good | Good | 2.63 | 99 | 67 | 56 | 44 |
| Ex. 4 | No | Acryl | 125 | 65 | Good | Good | 2.66 | 98 | 68 | 55 | 45 |
| Ex. 5 | No | Acryl | 100 | 47 | Good | Good | 2.70 | 98 | 67 | 54 | 40 |
| Ex. 6 | No | Acryl | 90 | 33 | Good | Good | 2.56 | 97 | 66 | 53 | 41 |
| Ex. 7 | No | Soluble Nitrocellulose | 210 | 106 | Good | Good | 2.71 | 98 | 68 | 52 | 44 |
| Ex. 8 | No | Soluble Nitrocellulose | 100 | 104 | Good | Good | 2.73 | 97 | 66 | 57 | 43 |
| Ex. 9 | No | chitosan | 230 | 45 | Good | Good | 2.66 | 99 | 67 | 58 | 44 |
| Ex. 10 | No | chitosan | 130 | 26 | Good | Good | 2.69 | 98 | 66 | 55 | 42 |
| Ex. 11 | No | Acryl | 200 | 105 | Good | Good | 2.64 | 98 | 69 | 57 | 44 |
| Ex. 12 | No | Acryl | 175 | 92 | Good | Good | 2.72 | 99 | 68 | 56 | 44 |
| Ex. 13 | No | Acryl | 150 | 78 | Good | Good | 2.63 | 99 | 69 | 57 | 44 |
| Ex. 14 | No | Acryl | 125 | 65 | Good | Good | 2.66 | 98 | 67 | 58 | 43 |
| Ex. 15 | No | Acryl | 100 | 47 | Good | Good | 2.70 | 98 | 68 | 55 | 42 |
| Ex. 16 | No | Acryl | 90 | 33 | Good | Good | 2.56 | 98 | 68 | 56 | 45 |
| Ex. 17 | No | Soluble Nitrocellulose | 210 | 106 | Good | Good | 2.71 | 98 | 69 | 54 | 42 |
| Ex. 18 | No | Soluble Nitrocellulose | 100 | 104 | Good | Good | 2.73 | 99 | 66 | 56 | 44 |
| Ex. 19 | No | Chitosan | 230 | 45 | Good | Good | 2.66 | 99 | 68 | 59 | 43 |
| Ex. 20 | No | Chitosan | 130 | 26 | Good | Good | 2.69 | 97 | 68 | 54 | 45 |
| Comp. Ex. 1 | No | Acryl | 200 | 102 | Good | Good | 2.45 | 98 | 67 | 54 | 41 |
| Comp. Ex. 2 | Yes | Acryl | 200 | 103 | Good | Good | 2.65 | 97 | 62 | 49 | 33 |
| Comp. Ex. 3 | No | Epoxy | 240 | 100 | Good | Good | 2.60 | 90 | 58 | 38 | 12 |
| Comp. Ex. 4 | No | Acryl | 225 | 107 | Good | Poor | 2.58 | 96 | 61 | 47 | 32 |
| Comp. Ex. 5 | No | Acryl | 75 | 29 | Poor | Good | 2.62 | 97 | 62 | 41 | 30 |
| Comp. Ex. 6 | No | Soluble Nitrocellulose | 230 | 111 | Good | Poor | 2.57 | 98 | 61 | 42 | 33 |
| Comp. Ex. 7 | No | Soluble Nitrocellulose | 90 | 98 | Poor | Good | 2.65 | 98 | 60 | 43 | 31 |
| Comp. Ex. 8 | No | Chitosan | 250 | 56 | Good | Poor | 2.54 | 98 | 62 | 47 | 32 |
| Comp. Ex. 9 | No | Chitosan | 100 | 17 | Poor | Good | 2.61 | 97 | 61 | 46 | 31 |
| Comp. Ex. 10 | No | Epoxy | 240 | 100 | Good | Good | 2.60 | 91 | 57 | 37 | 10 |
| Comp. Ex. 11 | No | Acryl | 225 | 107 | Good | Poor | 2.58 | 94 | 59 | 44 | 28 |
| Comp. Ex. 12 | No | Acryl | 75 | 29 | Poor | Good | 2.62 | 96 | 59 | 40 | 26 |
| Comp. Ex. 13 | No | Soluble Nitrocellulose | 230 | 111 | Good | Poor | 2.57 | 96 | 58 | 41 | 27 |
| Comp. Ex. 14 | No | Soluble Nitrocellulose | 90 | 98 | Poor | Good | 2.65 | 94 | 59 | 42 | 29 |
| Comp. Ex. 15 | No | Chitosan | 250 | 56 | Good | Poor | 2.54 | 96 | 60 | 45 | 28 |
| Comp. Ex. 16 | No | Chitosan | 100 | 17 | Poor | Good | 2.61 | 96 | 62 | 44 | 30 |

In Examples 1 to 20, the foils showed sufficient original sheet strength, thereby enabling to obtain larger battery capacity with the same positive electrode thickness as the conventional technique. In addition, the high rate characteristics is superior, since the discharge rate characteristics at 20C is 40% or more.

In Comparative Example 1, the thickness of the foil was made thicker in order to compensate the insufficient original sheet strength. Accordingly, the positive electrode material layer became thin, which lead to inferior battery capacity even with sufficient high rate characteristics.

In Comparative Example 2, insufficient original sheet strength resulted in generation of cuts in the positive electrode materials coated during the active-material-application step.

In Comparative Examples 3 and 10, usage of epoxy-based resin resulted in inferior high rate characteristics even though adhesion was sufficient.

In Comparative Examples 4 to 9 and in Comparative Examples 11 to 16, the contact angle came out of the range defined in the present invention. Therefore, the adhesion was inferior, the interface resistance was high, and the high rate characteristics was inferior.

### Explanation of Symbols

- 1:: current collector
- 3:: conductive substrate
- 5:: resin layer (resin layer for current collector)
- 7:: electrode structure
- 9:: active material layer or electrode material layer

## Claims

1. A current collector (1) comprising:
a conductive substrate (3), and
a resin layer (5) provided on one side or both sides of the conductive substrate (3); wherein:
the conductive substrate (3) is an aluminum alloy foil obtained by subjecting an aluminum alloy cast ingot comprising 0.03 to 1.0 mass% of Fe, 0.01 to 0.3 mass% of Si, 0.0001 to 0.2 mass% of Cu, with the rest consisting of Al and unavoidable impurities, wherein an amount of each of the unavoidable impurities is 0.02% or less, and a total amount thereof is 0.15% or less, to a homogenizing treatment at 550 to 620°C for 1 to 20 hours, followed by a hot rolling with a starting temperature of 500°C or higher and an end-point temperature of 255 to 300°C, and then performing cold rolling,
the aluminum alloy foil after the final cold rolling has a tensile strength of 180 MPa or higher, a 0.2% yield strength of 160 MPa or higher, and an electrical conductivity of 58% IACS or higher,
the aluminum alloy foil has a tensile strength of 170 MPa or higher and a 0.2% yield strength of 150 MPa or higher even when the aluminum alloy foil after the final cold rolling is subjected to heat treatment at any of 120°C for 24 hours, 140°C for 3 hours, and 160°C for 15 minutes,
the resin layer (5) comprises a resin containing an acryl-based resin, a soluble nitrocellulose-based resin or a chitosan-based resin, and a conductive material; and a water contact angle of the resin layer surface measured by θ/2 method in a thermostatic chamber at 23°C is 30 degrees or more and 105 degrees or less when the resin is the acryl-based resin, 100 degrees of more and 110 degrees or less when the resin is the soluble nitrocellulose-based resin, and 20 degrees or more and 50 degrees or less when the resin is the chitosan-based resin.

2. An electrode structure (7) comprising the current collector (1) of Claim 1, and an active material layer (9) or an electrode material layer provided on the resin layer of Claim 1.

3. A non-aqueous electrolyte battery or a capacitor member, comprising the electrode structure (7) of Claim 2.

## Patentansprüche

1. Stromkollektor (1), umfassend:
ein leitfähiges Substrat (3), und
eine Harzschicht (5), vorgesehen auf einer Seite oder beiden Seiten des leitfähigen Substrats (3); wobei:
das leitfähige Substrat (3) eine Aluminiumlegierungsfolie ist, die erhalten wird durch Unterziehen eines Aluminiumlegierungsgussblocks, umfassend 0,03 bis 1,0 Masse-% Fe, 0,01 bis 0,3 Masse-% Si, 0,0001 bis 0,2 Masse-% Cu, wobei der Rest aus Al und unvermeidbaren Verunreinigungen besteht, wobei eine Menge von jeder der unvermeidbaren Verunreinigungen 0,02 % oder weniger beträgt, und eine Gesamtmenge davon 0,15 % oder weniger beträgt, einer Homogenisierungsbehandlung bei 550 bis 620 °C über 1 bis 20 Stunden, gefolgt von einem Warmwalzen mit einer Anfangstemperatur von 500 °C oder höher und einer Endtemperatur von 255 bis 300 °C, und danach Durchführen eines Kaltwalzens,
die Aluminiumlegierungsfolie nach dem abschließenden Kaltwalzen eine Zugfestigkeit von 180 MPa oder höher, eine 0,2%-Dehngrenze von 160 MPa oder höher und eine elektrische Leitfähigkeit von 58 % IACS oder höher aufweist,
die Aluminiumlegierungsfolie eine Zugfestigkeit von 170 MPa oder höher und eine 0,2%-Dehngrenze von 150 MPa oder höher aufweist, selbst wenn die Aluminiumlegierungsfolie nach dem abschließenden Kaltwalzen einer Wärmebehandlung bei 120 °C über 24 Stunden, bei 140 °C über 3 Stunden oder bei 160 °C über 15 Minuten unterzogen wird,
die Harzschicht (5) ein Harz, das ein Harz auf Acrylbasis, ein Harz auf Basis von löslichem Cellulosenitrat oder ein Harz auf Chitosanbasis enthält, und ein leitfähiges Material umfasst; und ein Wasser-Kontaktwinkel der Oberfläche der Harzschicht, gemessen mittels θ/2-Methode in einer thermostatischen Kammer bei 23 °C, 30° oder mehr und 105° oder weniger, wenn das Harz das Harz auf Acrylbasis ist, 100° oder mehr und 110° oder weniger, wenn das Harz das Harz auf Basis von löslichem Cellulosenitrat ist, und 20° oder mehr und 50° oder weniger, wenn das Harz das Harz auf Chitosanbasis ist, beträgt.

2. Elektrodenstruktur (7), umfassend den Stromkollektor (1) nach Anspruch 1, und eine Aktivmaterialschicht (9) oder eine Elektrodenmaterialschicht, vorgesehen auf der Harzschicht nach Anspruch 1.

3. Batterie mit nichtwässrigem Elektrolyt oder ein Kondensatorelement, umfassend die Elektrodenstruktur (7) nach Anspruch 2.

## Revendications

1. Collecteur de courant (1) comprenant :
un substrat conducteur (3), et
une couche de résine (5) prévue sur une face ou sur les deux faces du substrat conducteur (3) ; où :
le substrat conducteur (3) est une feuille en alliage d'aluminium obtenue en soumettant un lingot d'alliage d'aluminium contenant de 0,03 à 1,0 % en masse de Fe, de 0,01 à 0,3 % en masse de Si, de 0,0001 à 0,2 % en masse de Cu, le reste consistant en Al et en impuretés inévitables, une valeur de chacune des impuretés inévitables étant égale ou inférieure à 0,02 %, et une valeur totale de celles-ci étant égale ou inférieure à 0,15 %, à un traitement d'homogénéisation entre 550 et 620° C pendant 1 à 20 heures, suivi d'un laminage à chaud avec une température initiale d'au moins 500° C et une température finale comprise entre 255 et 300° C, puis d'un laminage à froid,
la feuille en alliage d'aluminium présentant après laminage à froid final une résistance à la traction d'au moins 180 MPa, une limite d'élasticité à 0,2 % d'au moins 160 MPa, et une conductivité électrique d'au moins 58 % IACS,
la feuille en alliage d'aluminium présente une résistance à la traction d'au moins 170 MPa et une limite d'élasticité à 0,2 % d'au moins 150 MPa même si la feuille en alliage d'aluminium est soumise après laminage à froid final à un traitement thermique à 120° C pendant 24 heures, ou à 140° C pendant 3 heures ou à 160° C pendant 15 minutes,
la couche de résine (5) comprend une résine contenant une résine à base acrylique, une résine à base de nitrocellulose soluble ou une résine à base de chitosane et un matériau conducteur ; et un angle de contact avec l'eau de la surface de la couche de résine mesuré par la méthode θ/2 dans une chambre thermostatique à 23° C est compris entre 30 degrés et 105 degrés si la résine est la résine à base acrylique, entre 100 degrés et 110 degrés si la résine est la résine à base de nitrocellulose soluble, et entre 20 degrés et 50 degrés si la résine est la résine à base de chitosane.

2. Structure d'électrode (7) comprenant le collecteur de courant (1) selon la revendication 1, et une couche de matériau actif (9) ou une couche de matériau d'électrode prévue sur la couche de résine selon la revendication 1.

3. Batterie à électrolyte non aqueux ou élément de condensateur, comprenant la structure d'électrode (7) selon la revendication 2.
